# FASCICULE DE BREVET EUROPEEN

(11) **EP 2 882 161 B1**
(45) Date de publication et mention de la délivrance du brevet: **19.07.2017**
(21) Numéro de dépôt: 14196616.8
(22) Date de dépôt: 05.12.2014
(51) Int. Cl.: H04L 29/06, H04W 76/02

(54) **Procédé et dispositf d' établissement d'une communication**
Verfahren und Vorrichtung zur Herstellung einer Kommunikation
Method and device for establishing communication

(30) Priorité: 06.12.2013 FR 1362254
(43) Date de publication de la demande: 10.06.2015
(73) Titulaire: Orange, 75015 Paris (FR)
(72) Inventeur: Bouvet, Bertrand, 22700 PERROS-GUIREC (FR)

(56) Documents cités:
- WO-A1-2010/099829
- US-A1- 2006 218 291
- "GSM Association -Rich Communication Suite 5.1 Advanced Communications Services and Client Specification - Version 2.0 -pages 1-250", GSM ASSOCIATION, 3 mai 2013 (2013-05-03), pages 1-250, XP055131358,

## Description

L'invention se situe dans le domaine des réseaux de télécommunication. Elle concerne un dispositif et un procédé d'établissement d'une communication entre au moins deux terminaux.

Il est aujourd'hui possible pour un utilisateur d'être joint sur plusieurs terminaux via une même identité publique. Une identité publique d'un utilisateur, aussi appelée IMPU pour IP (Internet Protocol) Multimedia Public Identity en anglais. Une identité publique correspond par exemple à un numéro de téléphone attribué par un opérateur d'un réseau de communication, par exemple un réseau de communication IMS (pour IP Multimedia Subsystem). L'identité publique attribuée à un utilisateur permet à d'autres terminaux de joindre le terminal de cet utilisateur pour communiquer. L'utilisateur peut associer plusieurs terminaux à la même identité publique. Ainsi, l'utilisateur peut être joint, via cette identité publique partagée, sur n'importe lequel des terminaux qui ont été associés à cette identité publique.

Ainsi, lorsqu'un terminal appelant émet une demande de communication à destination de l'identité publique d'un utilisateur appelé, par exemple par l'envoi d'un message INVITE selon le protocole SIP (pour Session Initiation Protocol en anglais), un serveur S-CSCF (pour Serving Call Session Control Function en anglais) du réseau de communication IMS transmet la demande de communication à tous les terminaux enregistrés dans le réseau de communication IMS avec l'identité publique destinataire. La transmission de la demande de communication est faite selon un mécanisme appelé « forking » en anglais. Le réseau de communication IMS transmet la demande de communication à tous les terminaux qui ont été associés à l'identité publique et qui sont connectés au réseau de communication IMS.

La transmission de la demande de communication à tous les terminaux peut être faite en parallèle ou de manière séquentielle selon une priorité attribuée à chaque terminal associé à l'identité publique destinataire.

Le mécanisme de « forking » a été décrit ici dans le cadre d'un mécanisme de « forking » réseau où la transmission de la demande de communication à tous les terminaux associés à une même identité publique est faite par un serveur S-CSCF du réseau de communication IMS. Le mécanisme de « forking » réseau permet de transmettre une demande de communication seulement à des terminaux destinataires supportant le protocole SIP.

Un mécanisme de « forking » applicatif peut aussi être mis en oeuvre par un serveur d'application du réseau de communication IMS sur un principe similaire à celui du mécanisme de « forking » réseau. Le mécanisme du « forking » applicatif permet de transmettre la demande de communication à tout type de terminaux destinataires, supportant le protocole SIP, ou GSM (Global System for Mobile communications) ou RTC (Réseau Téléphonique Commuté). Dans le cas du « forking » applicatif, les terminaux destinataires peuvent alors avoir une identité différente. De tels terminaux destinataires sont alors associés par le serveur d'application à une même identité publique. Ainsi, lorsque le terminal appelant envoie une demande de communication à une telle identité publique destinataire, tous les terminaux destinataires associés à cette identité publique recevront la demande de communication.

Sur réception de la demande de communication, un terminal associé à l'identité publique destinataire sonne afin d'informer l'utilisateur appelé de la demande de communication. Le terminal associé à l'identité publique destinataire envoie également au terminal de l'utilisateur appelant une réponse provisoire, par exemple sous la forme d'un message SIP 180 Ringing, pour déclencher sur le terminal de l'utilisateur appelant un retour de sonnerie. Chaque terminal associé à l'identité publique destinataire et connecté au réseau de communication IMS au moment de l'émission de la demande de communication reçoit la demande de communication.

L'utilisateur appelé peut alors prendre la communication avec n'importe lequel des terminaux ayant reçu la demande de communication.

Le mécanisme de transmission (« forking ») de la demande de communication à plusieurs terminaux associés à une même identité publique est transparent pour l'utilisateur appelant. L'utilisateur appelant n'a donc pas connaissance que sa demande de communication est transmise à plusieurs terminaux. L'utilisateur appelant qui émet une demande de communication n'a donc pas connaissance par exemple qu'un autre utilisateur est susceptible de prendre la demande de communication si cet autre utilisateur est à proximité d'un terminal de l'utilisateur appelé. Ou selon un autre exemple, l'utilisateur appelant qui émet une demande de communication ne sait pas que sa demande de communication a de grande chance d'aboutir puisqu'elle est transmise à plusieurs terminaux de l'utilisateur appelé.

Le standard de communication RCS (pour Rich Communication Suite en anglais) permet à un utilisateur d'un terminal compatible RCS d'établir une communication enrichie avec un autre utilisateur disposant également d'un terminal compatible RCS.

Ainsi, une communication voix peut notamment être enrichie par l'ajout d'un flux vidéo à la communication, le partage de fichiers vidéo, audio, texte, etc.

Afin qu'un utilisateur appelant soit informé des capacités RCS du terminal d'un utilisateur qu'il souhaite appeler, le terminal de l'utilisateur appelant affiche par exemple à l'utilisateur appelant un carnet d'adresses enrichi comprenant les capacités RCS du terminal d'un contact enregistré dans le carnet d'adresses. Le terminal de l'utilisateur appelant met à jour régulièrement les capacités RCS des contacts de l'utilisateur appelant enregistrés dans le carnet d'adresses associé au terminal de l'utilisateur appelant. Par exemple, la mise à jour peut être effectuée à chaque démarrage, ou toutes les 24 heures, ou à chaque sélection d'un contact dans le carnet d'adresses, Pour cela, le terminal de l'utilisateur appelant envoie à l'identité publique de chaque contact enregistré dans le carnet d'adresses un message de découverte des capacités, par exemple un message SIP OPTIONS selon le protocole SIP. Chaque terminal d'un contact, qui a reçu un message SIP OPTIONS envoyé par le terminal de l'utilisateur appelant, répond en envoyant au terminal de l'utilisateur appelant un message SIP 2000K comprenant notamment les capacités RCS supportées par le terminal du contact.

L'utilisateur appelant est ainsi informé des capacités RCS supportées par le terminal d'un contact avec lequel il souhaite communiquer. Cependant, les capacités RCS du terminal d'un contact de l'utilisateur appelant qui sont stockées dans le carnet d'adresses de l'utilisateur appelant ne sont pas forcément à jour au moment où l'utilisateur appelant émet une demande de communication vers le terminal du contact.

De plus, lorsqu'un contact de l'utilisateur appelant dispose de plusieurs terminaux associés à une même identité publique partagée, le message SIP OPTIONS envoyé par le terminal de l'utilisateur appelant à l'identité publique partagée du contact est alors transmis par le serveur S-CSCF du réseau de communication IMS à tous les terminaux du contact associés à ladite identité publique partagée selon le mécanisme de « forking » qui est mis en oeuvre par le réseau de communication IMS. Lorsque chaque terminal du contact associé à ladite identité publique partagée du contact qui a reçu le message SIP OPTIONS répond par l'envoi d'un message SIP 2000K comprenant les capacités RCS supportées par le terminal du contact, le réseau de communication IMS filtre les réponses émises par les terminaux du contact et ne transmet que le premier message SIP 2000K envoyé au terminal de l'utilisateur appelant en réponse au message SIP OPTIONS envoyé par le terminal de l'utilisateur appelant.

Le terminal de l'utilisateur appelant n'a donc pas connaissance de l'ensemble des capacités RCS des terminaux associés à l'identité publique partagée du contact. Le terminal de l'utilisateur appelant n'a connaissance que des capacités RCS supportés par le terminal qui a répondu en premier au message SIP OPTIONS. Or, le terminal qui a répondu en premier au message SIP OPTIONS n'est pas forcément celui disposant des capacités RCS les plus appropriées. Par exemple, le terminal qui a répondu en premier peut indiquer qu'il ne supporte pas l'ajout de flux vidéo dans la communication voix. Or, l'utilisateur appelé peut disposer d'un autre terminal supportant l'ajout de flux vidéo dans la communication voix. Si l'utilisateur appelant souhaitait utiliser cette fonctionnalité lors d'une communication avec l'utilisateur appelé, il peut alors décider de ne pas établir de communication avec l'utilisateur appelé. Le terminal de l'utilisateur appelant affiche ainsi à l'utilisateur appelant des capacités RCS en relation avec l'utilisateur appelé qui sont incomplètes.

Ainsi, lorsque l'utilisateur appelant émet une demande de communication vers l'identité publique d'un contact, les capacités RCS associées au contact qui sont stockées dans le carnet d'adresses de l'utilisateur appelant ne sont pas forcément à jour.

De plus, si le contact dispose de plusieurs terminaux associés à une même identité publique, les capacités RCS associées au contact qui sont stockées dans le carnet d'adresses de l'utilisateur appelant ne sont pas représentatives des capacités RCS supportées par tous les terminaux vers lesquels la demande de communication est transmise par le réseau de communication et qui sont susceptibles de répondre à la demande de communication.

De plus, si le contact dispose de plusieurs terminaux associés à une même identité publique, l'utilisateur appelant n'a pas connaissance que sa demande de communication est transmise à plusieurs terminaux.

Le document US2006/0218291A1 décrit un procédé d'échanges de capacités entre terminaux dans un système de services IMS combinés à un réseau fonctionnant en mode circuit.

Un des buts de l'invention est d'apporter des améliorations par rapport à l'état de la technique.

Elle propose à cet effet un procédé d'établissement d'une communication initiée par un terminal émetteur d'une demande de communication à destination d'une identité publique partagée qui est associée à au moins un premier et un deuxième terminal destinataire. Le procédé comprend les étapes suivantes mises en oeuvre par le terminal émetteur :
- une étape d'envoi de la demande de communication à destination de l'identité publique partagée, la demande de communication étant reçue par au moins le premier et le deuxième terminal destinataire,
- suite à la réception d'au moins une première réponse provisoire à la demande de communication, en provenance du premier terminal destinataire et d'une deuxième réponse provisoire à la demande de communication ,pour chaque première et deuxième réponse provisoire reçue
   i. une étape d'obtention, à partir de la réponse provisoire reçue, d'une adresse identifiant le terminal destinataire qui a envoyé la réponse provisoire reçue,
   ii. une étape d'envoi d'un message de découverte des capacités d'un terminal audit terminal destinataire à partir de l'adresse obtenue,
   iii. une étape de réception d'un message de réponse au message de découverte des capacités d'un terminal, en provenance du terminal destinataire, ledit message de réponse comprenant les capacités supportées par le terminal destinataire,
- une étape de restitution d'une information représentative des capacités supportées par le premier terminal destinataire et d'une information représentative des capacités supportées par le deuxième terminal destinataire.

Le procédé d'établissement d'une communication selon l'invention permet ainsi à un terminal émetteur d'une demande de communication d'être informé des capacités d'un terminal susceptible de prendre la communication demandée. Selon l'invention, l'envoi d'un message de découverte des capacités d'un terminal est fait au cours de la phase d'établissement d'appel, avant que la communication entre le terminal émetteur et un terminal destinataire soit établie.

Le message de découverte des capacités d'un terminal est par exemple un message SIP OPTIONS du protocole SIP. Les capacités correspondent notamment aux capacités RCS supportées par le terminal destinataire.

Avantageusement, les étapes du procédé selon l'invention sont mises en oeuvre au cours d'un dialogue, dit « early dialog » selon le protocole SIP. Un « early dialog » est défini par l'émission d'une demande de communication par le terminal émetteur à destination d'une identité publique, puis par la réception d'une réponse provisoire à la demande de communication, la réponse provisoire étant émise par un terminal associé à l'identité publique et ayant reçu la demande de communication. Ainsi, la réponse provisoire à la demande de communication reçue par le terminal émetteur est avantageusement utilisée afin d'obtenir une adresse permettant de communiquer directement avec le terminal destinataire ayant émis cette réponse provisoire. En effet, avant la réception de la réponse provisoire, le terminal émetteur n'a pas d'autres moyens pour joindre les terminaux associés à l'identité publique partagée que d'envoyer un message à destination de l'identité publique partagée. Ce qui déclenche alors le mécanisme de « forking » du réseau de communication IMS.

Dans l'état de l'art, lorsque le message SIP OPTIONS est envoyé après l'établissement de la communication avec un terminal associé à l'identité publique partagée, le terminal émetteur n'a alors accès qu'à l'adresse du terminal associé à l'identité publique partagée ayant pris la communication et donc qu'aux capacités de ce seul terminal.

L'envoi du message de découverte des capacités pendant la phase d'établissement d'appel suite à la réception d'une réponse provisoire permet ainsi d'obtenir les capacités d'un terminal susceptible de prendre la communication, c'est-à-dire un terminal associé à l'identité publique partagé et connecté au réseau de communication.

Avantageusement, l'envoi du message de découvertes aux terminaux destinataires ayant envoyés une réponse provisoire à la demande de communication est fait lorsqu'au moins deux réponses provisoires sont reçues par le terminal émetteur ; Ainsi, les ressources du réseau de communication sont optimisées, notamment la bande passante nécessaire à la transmission des messages de signalisation d'établissement d'une communication et les ressources des serveurs du coeur de réseau de communication par lesquels les messages de signalisation d'établissement d'une communication transitent.

Grâce à l'invention, l'utilisateur du terminal émetteur est informé avant l'établissement de la communication des capacités RCS des terminaux destinataires avec lesquels le terminal émetteur est susceptible d'établir la communication.

Ainsi, si les capacités RCS des terminaux destinataires avec lesquels le terminal émetteur est susceptible d'établir la communication ne conviennent pas à l'utilisateur du terminal émetteur, l'utilisateur du terminal émetteur peut décider d'annuler la demande de communication et de reporter son appel. En fonction des capacités RCS des terminaux destinataires qui sont restituées à l'utilisateur du terminal émetteur, l'utilisateur du terminal émetteur peut également décider d'utiliser un autre moyen de communication ou un autre terminal pour communiquer avec un des terminaux destinataires.

L'invention est avantageuse par rapport à une solution plus coûteuse utilisant un serveur mis en oeuvre dans le réseau de communication et qui agrégerait les réponses comprenant les capacités de tous les terminaux associés à une identité publique partagée. En effet, l'invention permet d'obtenir uniquement les capacités des terminaux susceptibles de prendre la communication. L'invention permet de ne pas fournir d'informations inutiles à l'utilisateur du terminal émetteur et de ne tenir compte que des terminaux connectés au réseau de communication au moment de l'émission de la demande de communication et qui répondent à la demande de communication, donc a priori libres pour communiquer avec le terminal émetteur.

Les différents modes ou caractéristiques de réalisation mentionnés ci-après peuvent être ajoutés indépendamment ou en combinaison les uns avec les autres, aux étapes du procédé défini ci-dessus.

Selon un mode particulier de réalisation de l'invention, le message de découverte des capacités comprend un paramètre d'identification de dialogue entre le terminal émetteur et le terminal destinataire, ledit paramètre d'identification étant différent d'un paramètre d'identification de dialogue compris dans la demande de communication envoyée. Selon ce mode particulier de réalisation de l'invention, le terminal émetteur identifie les dialogues initiés pendant la phase d'établissement de la communication avec les différents terminaux destinataires.

Selon un autre mode particulier de réalisation de l'invention, le procédé d'établissement d'une communication comprend en outre :
une étape d'obtention à partir de la réponse provisoire reçue d'une information représentative d'un type de terminal correspondant au type du terminal destinataire ayant envoyé la réponse provisoire reçue,
une étape de restitution de ladite information représentative du type du terminal destinataire, simultanément à la restitution de l'information représentative des capacités supportées par le terminal destinataire.

Selon ce mode particulier de réalisation de l'invention, en plus des capacités du terminal destinataire de la demande de communication, l'utilisateur du terminal émetteur est informé du type du terminal susceptible de prendre la communication demandée. Par exemple, le terminal émetteur peut afficher une icône représentative du type du terminal destinataire. Le type du terminal destinataire peut être une télévision connectée, un téléphone haute définition, une tablette, un téléphone mobile, un téléphone fixe, ...

L'utilisateur appelant sait ainsi quel type de terminal est utilisé pour mettre en oeuvre les capacités RCS. L'utilisateur appelant peut donc évaluer les inconvénients et les avantages d'utiliser telle ou telle capacités RCS avec tel type de terminal. Par exemple si le terminal destinataire est une télévision, l'ajout de vidéo à faible débit peut produire une restitution de faible qualité sur le terminal destinataire. L'utilisateur appelant peut alors décider de reporter son appel ultérieurement ou de ne pas activer l'ajout de la vidéo au cours de la communication.

Selon un autre mode particulier de réalisation de l'invention, la deuxième réponse provisoire est reçue après un intervalle de temps prédéterminé après l'envoi de la demande de communication. La restitution de l'information représentative des capacités supportées par le premier terminal destinataire est alors modifiée simultanément, à la restitution de l'information représentative des capacités supportées par le deuxième terminal destinataire, de sorte à indiquer à l'utilisateur du terminal émetteur que le premier terminal destinataire ne sonne plus.

Selon ce mode particulier de réalisation de l'invention, le mécanisme de « forking » est séquentiel, c'est-à-dire que la demande de communication est transmise par le réseau de communication dans un premier temps au premier terminal destinataire , puis si le premier terminal destinataire n'a pas établi la communication avec le terminal émetteur, après un intervalle de temps prédéterminé, par exemple 20 secondes, la demande de communication est transmise au deuxième terminal destinataire.

Le terminal émetteur modifie alors la restitution de l'information représentative des capacités supportées par le premier terminal destinataire pour informer l'utilisateur appelant que le premier terminal destinataire n'est plus susceptible de prendre la communication après l'intervalle de temps prédéterminé.

Selon un autre mode particulier de réalisation de l'invention, la restitution de l'information représentative des capacités supportées par le premier terminal destinataire est effectuée simultanément à la restitution de l'information représentative des capacités supportées par le deuxième terminal destinataire.

Ce mode particulier de réalisation de l'invention est avantageux notamment lorsque le mécanisme de « forking » est simultané, c'est-à-dire que la demande de communication est transmise par le réseau de communication de manière simultanée au premier terminal destinataire et au deuxième terminal destinataire. La restitution simultanée de l'information représentative des capacités supportées par le premier terminal destinataire et de l'information représentative des capacités supportées par le deuxième terminal destinataire permet d'informer l'utilisateur appelant que plusieurs terminaux destinataires sont susceptibles de prendre la communication.

L'invention concerne aussi un dispositif d'établissement d'une communication initiée par un terminal émetteur d'une demande de communication à destination d'une identité publique partagée associée à au moins deux terminaux destinataires. Le dispositif comprend :
- des moyens d'obtention, à partir de la réponse provisoire reçue, activés suite à la réception d'au moins une réponse provisoire à la demande de communication en provenance de l'un des au moins deux terminaux destinataires, d'une adresse identifiant le terminal destinataire ayant envoyé la réponse provisoire,
- des moyens d'envoi d'un message de découverte des capacités d'un terminal audit terminal destinataire à partir de l'adresse obtenue,
- des moyens de réception d'un message de réponse au message de découverte des capacités d'un terminal, en provenance du terminal destinataire, ledit message de réponse comprenant les capacités supportées par le terminal destinataire,
- des moyens de restitution d'une information représentative des capacités supportées par le terminal destinataire.

Selon un mode particulier de réalisation de l'invention, un tel dispositif est compris dans un terminal.

Dans un mode particulier de réalisation de l'invention, les différentes étapes du procédé d'établissement d'une communication sont mises en oeuvre par des instructions de programmes d'ordinateurs.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes du procédé d'établissement d'une communication qui vient d'être décrit.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé d'établissement d'une communication en question.

Les avantages du dispositif d'établissement d'une communication, du terminal compris dans un tel dispositif et du programme d'ordinateur comportant des instructions adaptées à la mise en oeuvre des différentes étapes du procédé d'établissement d'une communication sont identiques à ceux présentés en relation avec le procédé d'établissement d'une communication selon l'un quelconque des modes particuliers de réalisation mentionnés ci-dessus.

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en oeuvre d'un mode particulier de réalisation de l'invention,
- la figure 2 illustre des étapes du procédé d'établissement d'une communication selon un mode particulier de réalisation de l'invention,
- les figures 3A à 3I illustrent des exemples de restitution d'une information représentative des capacités supportées par un terminal destinataire selon des modes particuliers de réalisation de l'invention,
- la figure 4 illustre un dispositif adapté pour mettre en oeuvre des étapes du procédé d'établissement d'une communication selon un mode particulier de réalisation de l'invention.

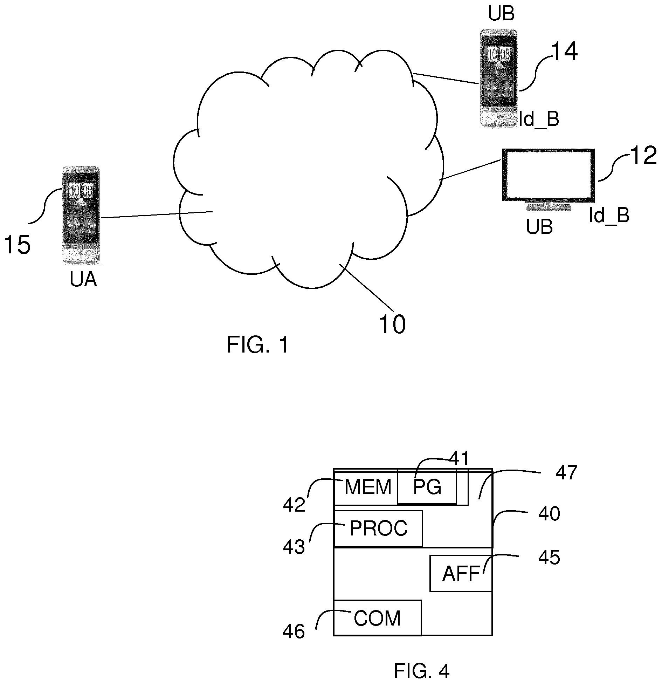

La figure 1 illustre un environnement de mise en oeuvre de l'invention selon un mode particulier de réalisation de l'invention.

L'environnement représenté en figure 1 comprend un réseau de communication 10 auquel sont connectés des terminaux 12, 14 et 15.

Le réseau de communication 10 peut être un réseau de communications mobile de type GSM, EDGE, 3G, 3G+, 4G... ou un réseau de communication fixe de type ADSL, Fibre, VDSL, WiFi, ....

Il peut être mis en oeuvre par une architecture de type RCS. Le réseau de communication 10 peut aussi être un réseau de communication IP mis en oeuvre par une architecture de réseau VoIP (pour Voice over IP) de type IMS ou tout autre architecture de réseau.

Le réseau de communication 10 peut correspondre à un groupe de réseaux de communication d'opérateurs différents interconnectés entre eux par l'intermédiaire de serveurs d'interconnexion (non représentés).

Les terminaux 12, 14 et 15 peuvent être tout type de terminaux permettant d'établir des sessions de communication de type téléphonique, visiophonique, messagerie instantanée, tableau blanc, etc.... Les terminaux 12, 14 et 15 correspondent par exemple à un téléphone portable, un smartphone (téléphone intelligent en anglais), une tablette, une télévision connectée à un réseau de communication, ou un ordinateur personnel.

Dans l'exemple décrit ici, le terminal 15 est un terminal associé à un utilisateur UA et les terminaux 12 et 14 sont des terminaux associés à un utilisateur UB. Les terminaux 12, 14 et 15 sont connectés au réseau de communication 10 et peuvent émettre et recevoir tout type de communications, via le réseau de communication 10.

De manière connue, l'utilisateur UB a associé les terminaux 12 et 14 à une même identité publique Id_B. L'identité publique Id_B permet par exemple à l'utilisateur UA de joindre l'utilisateur UB afin d'établir une communication entre le terminal 15 de l'utilisateur UA et un terminal 12 ou 14 de l'utilisateur UB. L'association des terminaux 12 et 14 à l'identité publique Id_B est stockée dans le réseau de communication 10.

Lorsque l'utilisateur UA souhaite communiquer avec l'utilisateur UB, le terminal 15 de l'utilisateur UA émet une demande de communication à destination de l'identité publique Id_B de l'utilisateur UB. La demande de communication est par exemple envoyée sous la forme d'un message SIP INVITE selon le protocole SIP. Le réseau de communication 10 met en oeuvre un mécanisme de « forking » qui transmet aux terminaux 12 et 14 de l'utilisateur UB la demande de communication émise par le terminal 15. La transmission de la demande de communication aux terminaux 12 et 14 peut être séquentielle ou simultanée selon une priorité attribuée aux terminaux 12 et 14. Par exemple, une telle priorité correspond au paramètre q d'un terminal défini dans la norme RFC3261 de l'IETF (pour Internet Engineering Task Force). Le paramètre q d'un terminal peut être affecté d'une valeur comprise entre 0.0 à 1.0. La valeur 1.0 correspond à la priorité la plus élevée. La valeur du paramètre q d'un terminal est fournie au réseau de communication 10 lors de l'enregistrement du terminal dans le réseau de communication. Ainsi, si le paramètre q du terminal 14 est affecté d'une valeur 1.0 et le paramètre q du terminal 12 est affecté de la valeur 0.0, le mécanisme de « forking » est séquentiel. La demande de communication émise par le terminal 15 est transmise dans un premier temps au terminal 14 par le réseau de communication 10. Puis, si le terminal 14 n'établit pas la communication demandée avec le terminal 15, le réseau de communication 10 transmet la demande de communication au terminal 12 et annule la transmission de la demande de communication au terminal 14.

Si le paramètre q des terminaux 14 et 12 est affecté de la même valeur, par exemple 1.0, le mécanisme de « forking » est simultané. La demande de communication émise par le terminal 15 est transmise simultanément aux terminaux 12 et 14 par le réseau de communication 10.

De même, lorsque l'utilisateur UA souhaite connaitre les capacités avec lesquelles il peut communiquer avec l'utilisateur UB, le terminal 15 émet un message SIP OPTIONS à destination de l'identité publique Id_B de l'utilisateur UB. Le réseau de communication 10 met alors en oeuvre le mécanisme de « forking ».

Le message SIP OPTIONS est transmis simultanément aux terminaux 12 et 14 par le réseau de communication 10. Sur réception du message SIP OPTIONS, le terminal 14 répond alors au terminal 15 par l'envoi d'un message SIP 200OK comprenant notamment les capacités supportées par le terminal 14. Sur réception du message SIP OPTIONS, le terminal 12 répond alors au terminal 15 par l'envoi d'un message SIP 200OK comprenant notamment les capacités supportées par le terminal 12. Le réseau de communication 10 filtre les messages SIP 200OK en provenance des terminaux 12 et 14. Le réseau de communication 10 ne transmet au terminal 15 que le premier message SIP 200OK reçu en provenance de l'identité publique Id_B, par exemple le message SIP 200OK envoyé par le terminal 12.

Il apparait ainsi que le terminal 15 ne connait pas de manière détaillée les capacités supportées par tous les terminaux de l'utilisateur UB.

Ainsi, lorsque le terminal 15 émet une demande de communication à destination de l'identité publique Id_B, l'utilisateur UA du terminal 15 ne connait pas les capacités supportées par les terminaux de l'utilisateur UB qui sont susceptibles de prendre la communication demandée.

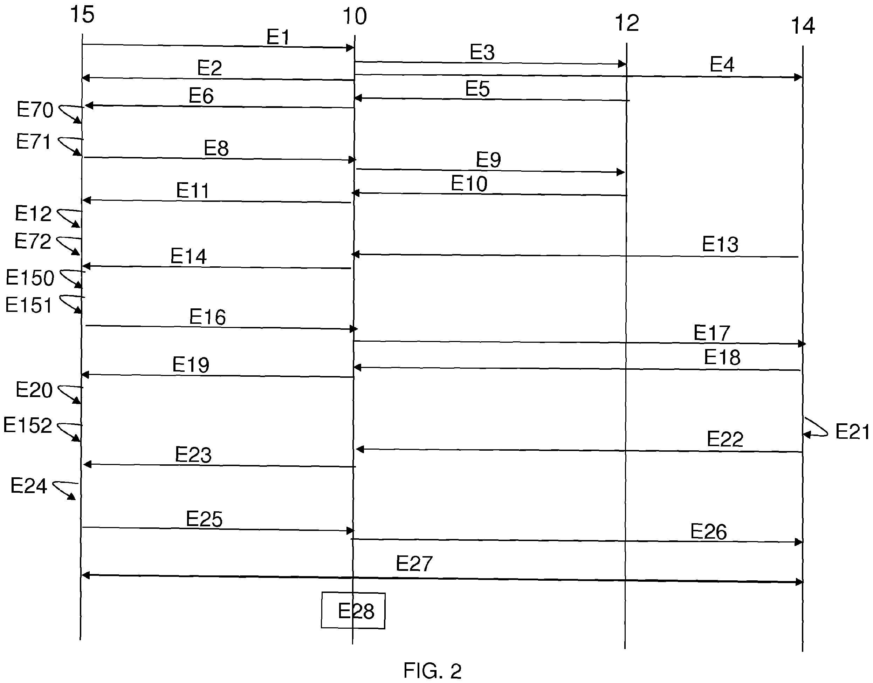

La figure 2 décrit les étapes du procédé d'établissement d'une communication mis en oeuvre selon un mode particulier de réalisation de l'invention. Le procédé d'établissement d'une communication est par exemple mis en oeuvre par le terminal 15 de la figure 1.

Lors d'une étape E1, le terminal 15 envoie une demande de communication à destination de l'identité publique Id_B afin de communiquer avec un terminal de l'utilisateur UB. La demande de communication est par exemple envoyée sous la forme d'un message SIP INVITE selon le protocole SIP. Le message SIP INVITE comprend notamment :
- dans un champ appelé « CallID », une chaine de caractère identifiant la communication demandée,
- dans un champ d'adresse émetteur de la demande de communication, appelé « From », l'adresse du terminal 15 comprenant une identité publique associée au terminal 15 et un champ appelé « Tag » identifiant le terminal 15. Le champ « Tag » est ajouté par le terminal 15 à l'identité publique associée au terminal 15.
- dans un champ d'adresse destinataire de la demande de communication, appelé « To », l'identité publique Id_B de l'utilisateur UB,
- dans un champ d'adresse SIP destinataire, appelé « R-URI » pour Request Uniform Ressource Identifier, l'identité publique Id_B de l'utilisateur UB,
- dans un champ appelé SDP (pour Session Description Protocol) une liste de paramètres de session relatifs au terminal 15, tels que les codecs audio, vidéo supportés par le terminal 15 et les adresses IP et ports de connexion utilisés par le terminal 15 pour recevoir et émettre les flux média de la communication.

Au cours de l'étape E1, la demande de communication est reçue par le réseau de communication 10.

Lors d'une étape E2, suite à la réception par le réseau de communication 10 du message SIP INVITE, le réseau de communication 10 envoie au terminal 15 un message SIP 100 Trying. Le message SIP 100 Trying indique au terminal 15 que la demande de communication a été reçue par le réseau de communication 10 et qu'elle est en cours de traitement.

Lors d'une étape E3, respectivement E4, le réseau de communication 10 transmet au terminal 12, respectivement 14, le message SIP INVITE reçu lors de l'étape E1. Selon la priorité affectée aux terminaux 12 et 14, les étapes E3 et E4 peuvent être faites simultanément ou de manière séquentielle séparées par un intervalle de temps prédéterminé, par exemple 20 secondes.

Lors d'une étape E5, suite à la réception du message SIP INVITE au cours de l'étape E3, le terminal 12 déclenche une sonnerie afin d'avertir l'utilisateur UB de la demande de communication. Au cours de l'étape E5, le terminal 12 envoie à destination du terminal 15 un message SIP 180 Ringing. Le message SIP 180 Ringing envoyé par le terminal 12 comprend notamment :
- dans un champ « CallID », la chaine de caractère identifiant la communication demandée identique à la valeur du champ « CallID » du message SIP INVITE reçu,
- dans un champ « To », l'adresse du terminal 12 comprenant l'identité publique Id_B et un champ « Tag » identifiant le terminal 12. Le champ « Tag » est ajouté par le terminal 12 à l'identité publique Id_B associée au terminal 12.
- dans un champ « From », l'adresse du terminal 15 contenue dans le champ « From » du message SIP INVITE.

Au cours de l'étape E5, le message SIP 180 Ringing envoyé par le terminal 12 est reçu par le réseau de communication 10.

Lors d'une étape E6, le réseau de communication 10 envoie au terminal 15 le message SIP 180 Ringing reçu lors de l'étape E5. Au cours de l'étape E6, le terminal 15 reçoit le message SIP 180 Ringing envoyé par le terminal 12. Le message SIP 180 Ringing constitue une réponse provisoire à la demande de communication en provenance d'un terminal destinataire de la demande de communication, i.e. le terminal 12.

La réception du message SIP 180 Ringing en provenance du terminal 12 déclenche sur le terminal 15 une étape E70 d'obtention d'une adresse identifiant le terminal destinataire ayant envoyé le message SIP 180 Ringing. Le terminal 15 obtient l'adresse identifiant le terminal 12 à partir du champ « To » du message SIP 180 Ringing comprenant l'identité publique Id_B et le champ « Tag » ajouté par le terminal 12.

Au cours de l'étape E70, le terminal 15 déclenche également un retour de sonnerie indiquant à l'utilisateur UA que le terminal 12 sonne.

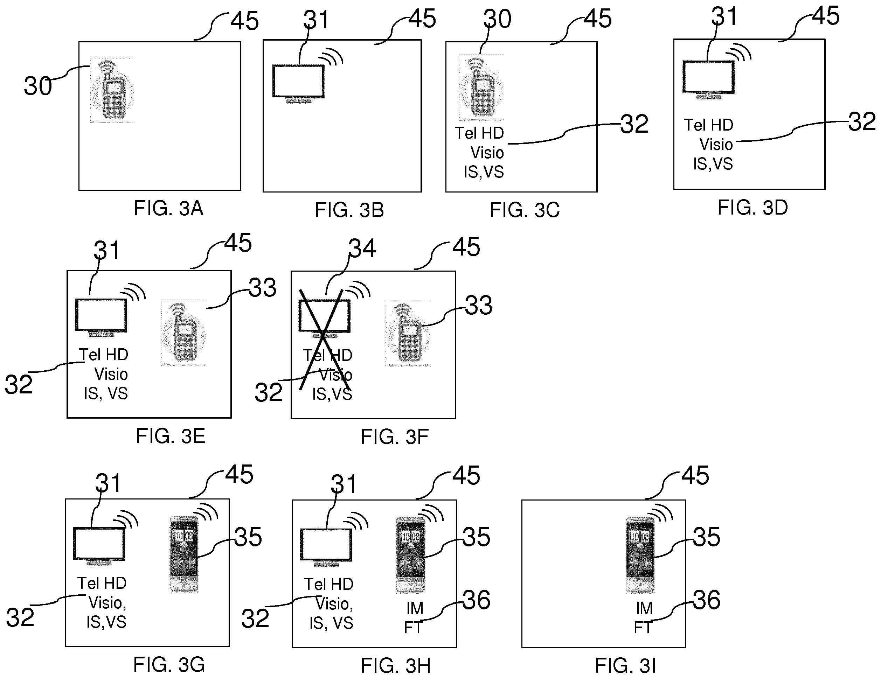

Selon un mode particulier de réalisation de l'invention, au cours de l'étape E70, le terminal 15 restitue visuellement à l'utilisateur UA que le terminal 12 sonne. Cette restitution visuelle est par exemple illustrée par la figure 3A. La figure 3A montre un écran 45 du terminal 15 affichant une icône 30 représentant un terminal recevant un appel.

Selon un autre mode particulier de réalisation de l'invention, lors d'une étape E71, le terminal 15 obtient à partir du message SIP 180 Ringing reçu en provenance du terminal 12, une information représentative du type du terminal 12. Le terminal 15 obtient l'information représentative du type du terminal 12 à partir d'un champ appelé « Server » d'un entête appelé « Header SIP » du message SIP 180 Ringing. Le champ « Server » peut comprendre notamment le nom du fabricant du terminal ayant généré le message SIP 180 Ringing, le type de terminal et la version logicielle du protocole SIP utilisée. Dans l'exemple illustré en figure 1, le terminal 12 est une télévision connectée au réseau de communication 10. Au cours de l'étape E71, le terminal 15 restitue visuellement à l'utilisateur UA une information indiquant le type du terminal 12. Cette restitution visuelle est par exemple illustrée par la figure 3B. La figure 3B montre un écran 45 du terminal 15 affichant une icône 31 représentant une télévision recevant un appel.

Lors d'une étape E8, suite à l'étape E70, le terminal 15 envoie un message SIP OPTIONS à destination du terminal 12 afin d'obtenir les capacités supportées par le terminal 12. Le message SIP OPTIONS envoyé par le terminal 15 constitue un message de découverte des capacités du terminal 12.

L'envoi du message SIP OPTIONS au terminal 12 est effectué grâce à l'adresse identifiant le terminal 12 obtenue du message SIP 180 Ringing lors de l'étape E70. L'adresse identifiant le terminal 12 comprend l'identité publique de l'utilisateur UB et le champ « Tag » ajouté par le terminal 12.

Le message SIP OPTIONS envoyé par le terminal 15 au terminal 12 comprend notamment :
- dans un champ « CallID », une chaine de caractère identifiant le dialogue entre le terminal 15 et le terminal 12, par exemple la valeur du champ « CallID » du message SIP INVITE envoyé par le terminal 15 au cours de l'étape E1 augmentée de 1,
- dans un champ « To », l'adresse identifiant le terminal 12 comprenant l'identité publique Id_B et le champ « Tag » identifiant le terminal 12.
- dans un champ « From », l'adresse du terminal 15 contenue dans le champ « From » du message SIP INVITE envoyé par le terminal 15 au cours de l'étape E1.

Il est nécessaire dans le message SIP OPTIONS d'utiliser un champ « CallID » différent du champ « CallID » du message SIP INVITE envoyé au cours de l'étape E1. En effet, le champ « CallID » permet d'identifier un dialogue, ou des échanges de messages, entre deux terminaux. Dans l'invention, le terminal 15 est susceptible d'échanger des messages pendant la phase d'établissement d'une communication avec plusieurs terminaux différents. Il est donc nécessaire que le terminal 15 puisse identifier de manière unique les messages reçus et envoyés avec un terminal particulier. Le champ « CallID » du message SIP OPTIONS envoyé au terminal 12 est donc affecté de la valeur du champ « CallID » du message SIP INVITE envoyé par le terminal 15 au cours de l'étape E1 augmentée de 1. Toute autre méthode pour fournir une autre valeur du champ « CallID » dans le message SIP OPTIONS est envisageable.

Au cours de l'étape E8, le réseau de communication 10 reçoit le message SIP OPTIONS envoyé par le terminal 15.

Lors d'une étape E9, le réseau de communication 10 envoie au terminal 12 le message SIP OPTIONS reçu lors de l'étape E8. Au cours de l'étape E9, le terminal 12 reçoit le message SIP OPTIONS envoyé par le terminal 15 lors de l'étape E8.

Lors d'une étape E10, le terminal 12 répond au message SIP OPTIONS reçu au cours de l'étape E9 par l'envoi au terminal 15 d'un message SIP 200OK. Le message SIP 200OK comprend notamment :
- dans un champ « CallID », la chaine de caractère identifiant le dialogue entre le terminal 15 et le terminal 12 identique à la valeur du champ « CallID » du message SIP OPTIONS envoyé par le terminal 15 au cours de l'étape E8,
- dans un champ « To », l'adresse identifiant le terminal 12 comprenant l'identité publique Id_B et le champ « Tag » identifiant le terminal 12.
- dans un champ « From », l'adresse du terminal 15 contenue dans le champ « From » du message SIP INVITE envoyé par le terminal 15 au cours de l'étape E1,
- dans un champ « Contact » d'un entête appelé « Header SIP », la liste des fonctionnalités supportées par le terminal 12, notamment les capacités selon le protocole RCS. La liste des fonctionnalités est insérée de manière connue dans le message SIP 200OK.

Au cours de l'étape E10, le réseau de communication 10 reçoit le message SIP 200OK envoyé par le terminal 12.

Lors d'une étape E11, le réseau de communication 10 envoie au terminal 15 le message SIP 200OK reçu lors de l'étape E10. Au cours de l'étape E11, le terminal 15 reçoit le message SIP 200OK envoyé par le terminal 12 lors de l'étape E10.

Le terminal 15 ayant envoyé un message SIP INVITE au cours de l'étape E1, le terminal 15 est en attente d'un message SIP 200OK en réponse au message SIP INVITE. Le terminal 15 doit donc pouvoir identifier un message SIP 200OK reçu en réponse à un message SIP INVITE ou à un message SIP OPTIONS. Le terminal 15 identifie le message SIP 200OK reçu au cours de l'étape E11 comme étant la réponse au message SIP OPTIONS envoyé au cours de l'étape E8 à partir de la valeur du champ « CallID » contenu dans le message SIP 200OK. La valeur du champ « CallID » du message SIP 200OK reçu au cours de l'étape E11 est identique à la valeur du champ « CallID » émis au cours de l'étape E8. La valeur du champ « CallID » permet ainsi d'identifier un dialogue, autrement dit un échange de messages, entre les terminaux 15 et 12.

Lors d'une étape E12, le terminal 15 restitue alors à l'utilisateur UA les capacités supportées par le terminal 12. Les capacités supportées par le terminal 12 sont obtenues par le terminal 15 à partir du message SIP 200OK reçu lors de l'étape E11, par exemple à partir de la liste des fonctionnalités indiquées dans le champ « Contact ».

La restitution est par exemple illustrée par la figure 3C. La figure 3C montre un écran 45 du terminal 15 affichant une icône 30 représentant un terminal recevant un appel et des chaînes de caractères 32 indiquant les fonctionnalités supportées par le terminal représenté par l'icône 30. Selon cet exemple, le terminal 12 supporte la fonctionnalité de communication de type voix en qualité haute définition (Tel HD), la fonctionnalité de communication en visiophonie (Visio), la capacité RCS de partage d'image (IS) et la capacité RCS de partage de vidéo (VS).

Selon un mode particulier de réalisation de l'invention, lors d'une étape 72, le terminal 15 restitue l'information du type du terminal 12 simultanément à la restitution des fonctionnalités supportées par le terminal 12 faite au cours de l'étape E12.

La restitution est par exemple illustrée par la figure 3D. La figure 3D montre un écran 45 du terminal 15 affichant une icône 31 représentant une télévision recevant un appel et des chaînes de caractères 32 indiquant les fonctionnalités supportées par le terminal représenté par l'icône 31. Selon cet exemple, le terminal 12 supporte la fonctionnalité de communication de type voix en qualité haute définition (Tel HD), la fonctionnalité de communication en visiophonie (Visio), la capacité RCS de partage d'image (IS) et la capacité RCS de partage de vidéo (VS).

Lors d'une étape E13, suite à la réception du message SIP INVITE au cours de l'étape E4, le terminal 14 déclenche une sonnerie afin d'avertir l'utilisateur UB de la demande de communication. Au cours de l'étape E13, le terminal 14 envoie à destination du terminal 15 un message SIP 180 Ringing. Le message SIP 180 Ringing envoyé par le terminal 14 comprend notamment :
- dans un champ « CallID », la chaine de caractère identifiant la communication demandée identique à la valeur du champ « CallID » du message SIP INVITE reçu,
- dans un champ « To », l'adresse du terminal 14 comprenant l'identité publique Id_B et un champ « Tag » identifiant le terminal 14. Le champ « Tag » est ajouté par le terminal 14 à l'identité publique Id_B associée au terminal 14.
- dans un champ « From », l'adresse du terminal 15 contenue dans le champ « From » du message SIP INVITE.

Au cours de l'étape E13, le message SIP 180 Ringing envoyé par le terminal 14 est reçu par le réseau de communication 10.

Lors d'une étape E14, le réseau de communication 10 envoie au terminal 15 le message SIP 180 Ringing reçu lors de l'étape E13. Au cours de l'étape E14, le terminal 15 reçoit le message SIP 180 Ringing envoyé par le terminal 14. Le message SIP 180 Ringing constitue une réponse provisoire à la demande de communication en provenance d'un terminal destinataire de la demande de communication, ici le terminal 14.

La réception du message SIP 180 Ringing en provenance du terminal 14 déclenche sur le terminal 15 une étape E150 d'obtention d'une adresse identifiant le terminal destinataire ayant envoyé le message SIP 180 Ringing. Le terminal 15 obtient l'adresse identifiant le terminal 14 à partir du champ « To » du message SIP 180 Ringing comprenant l'identité publique Id_B et le champ « Tag » ajouté par le terminal 14.

Comme le terminal 15 a déjà déclenché un retour de sonnerie au cours de l'étape E70, suite à la réception de la première réponse provisoire SIP 180 Ringing en provenance du terminal 12, le terminal 15 ne déclenche pas d'autre retour de sonnerie.

Selon un mode particulier de réalisation de l'invention, au cours de l'étape E150, le terminal 15 restitue visuellement à l'utilisateur UA que le terminal 14 sonne. La restitution visuelle est par exemple illustrée par la figure 3E. La figure 3E montre un écran 45 du terminal 15 affichant une icône 33 représentant un terminal recevant un appel.

Selon un mode particulier de réalisation de l'invention, l'étape E150 est effectuée simultanément à l'étape E70 ou à l'étape E72. Ainsi, l'utilisateur UA est informé qu'au moins deux terminaux associés à l'identité publique Id_B ont reçu la demande de communication envoyée lors de l'étape E1. Selon ce mode particulier de réalisation de l'invention, la figure 3E montre également une icône 31 représentant une télévision connectée recevant un appel et des chaines de caractères 32 indiquant les capacités supportées par le terminal 12 représenté par l'icône 31.

Selon un autre mode particulier de réalisation de l'invention, lors d'une étape E151, le terminal 15 obtient à partir du message SIP 180 Ringing reçu en provenance du terminal 14, une information représentative du type du terminal 14. Le terminal 15 obtient l'information représentative du type du terminal 14 à partir du champ « Server » de l'entête « Header SIP » du message SIP 180 Ringing. Dans l'exemple illustré en figure 1, le terminal 14 est un terminal mobile de type smartphone (téléphone intelligent). Au cours de l'étape E151, le terminal 15 restitue visuellement à l'utilisateur UA une information indiquant le type du terminal 14. Cette restitution visuelle est par exemple illustrée par la figure 3G. La figure 3G montre un écran 45 du terminal 15 affichant :
- une icône 31 représentant une télévision connectée recevant un appel et des chaines de caractères 32 indiquant les capacités supportées par le terminal 12 représenté par l'icône 31, et
- une icône 35 représentant un terminal mobile recevant un appel.

Lors d'une étape E16, suite à l'étape E150, le terminal 15 envoie un message SIP OPTIONS à destination du terminal 14 afin d'obtenir les capacités supportées par le terminal 14. Le message SIP OPTIONS envoyé par le terminal 15 constitue un message de découverte des capacités du terminal 14.

L'envoi du message SIP OPTIONS au terminal 14 est effectué grâce à l'adresse identifiant le terminal 14 obtenue du message SIP 180 Ringing lors de l'étape E150. L'adresse identifiant le terminal 14 comprend l'identité publique de l'utilisateur UB et le champ « Tag » ajouté par le terminal 14.

Le message SIP OPTIONS envoyé par le terminal 15 au terminal 14 comprend notamment :
- dans un champ « CallID », une chaine de caractère identifiant le dialogue entre le terminal 15 et le terminal 14, par exemple la valeur du champ « CallID » du message SIP INVITE envoyé par le terminal 15 au cours de l'étape E1 augmentée de 2,
- dans un champ « To », l'adresse identifiant le terminal 14 comprenant l'identité publique Id_B et le champ « Tag » identifiant le terminal 14.
- dans un champ « From », l'adresse du terminal 15 contenue dans le champ « From » du message SIP INVITE envoyé par le terminal 15 au cours de l'étape E1.

Au cours de l'étape E16, le réseau de communication 10 reçoit le message SIP OPTIONS envoyé par le terminal 15.

Lors d'une étape E17, le réseau de communication 10 envoie au terminal 14 le message SIP OPTIONS reçu lors de l'étape E16. Au cours de l'étape E17, le terminal 14 reçoit le message SIP OPITONS envoyé par le terminal 15 lors de l'étape E16.

Lors d'une étape E18, le terminal 14 répond au message SIP OPTIONS reçu au cours de l'étape E17 par l'envoi au terminal 15 d'un message SIP 200OK. Le message SIP 200OK comprend notamment :
- dans un champ « CallID », la chaine de caractère identifiant le dialogue entre le terminal 15 et le terminal 14 identique à la valeur du champ « CallID » du message SIP OPTIONS envoyé par le terminal 15 au cours de l'étape E16,
- dans un champ « To », l'adresse identifiant le terminal 14 comprenant l'identité publique Id_B et le champ « Tag » identifiant le terminal 14.
- dans un champ « From », l'adresse du terminal 15 contenue dans le champ « From » du message SIP INVITE envoyé par le terminal 15 au cours de l'étape E1,
- dans un champ « Contact » d'un entête appelé « Header SIP », la liste des fonctionnalités supportées par le terminal 14, notamment les capacités selon le protocole RCS. La liste des fonctionnalités est insérée de manière connue dans le message SIP 200OK.

Au cours de l'étape E18, le réseau de communication 10 reçoit le message SIP 200OK envoyé par le terminal 14.

Lors d'une étape E19, le réseau de communication 10 envoie au terminal 15 le message SIP 200OK reçu lors de l'étape E18. Au cours de l'étape E19, le terminal 15 reçoit le message SIP 200OK envoyé par le terminal 14 lors de l'étape E18. Le terminal 15 identifie le message SIP 200OK reçu au cours de l'étape E19 comme étant la réponse au message SIP OPTIONS envoyé au cours de l'étape E16 à partir de la valeur du champ « CallID » contenu dans le message SIP 200OK. La valeur du champ « CallID » du message SIP 200OK reçu au cours de l'étape E19 est identique à la valeur du champ « CallID » émis au cours de l'étape E16. La valeur du champ « CallID » permet ainsi d'identifier un dialogue entre les terminaux 15 et 14.

Lors d'une étape E20, le terminal 15 restitue alors à l'utilisateur UA les capacités supportées par le terminal 14. Les capacités supportées par le terminal 14 sont obtenues par le terminal 15 à partir du message SIP 200OK reçu lors de l'étape E19, par exemple à partir de la liste des fonctionnalités indiquées dans le champ « Contact ». La restitution est faite par exemple de manière similaire à celle illustrée par la figure 3C.

Selon un mode particulier de réalisation de l'invention, lors d'une étape E152, le terminal 15 restitue l'information du type du terminal 14 simultanément à la restitution des fonctionnalités supportées par le terminal 14 faite au cours de l'étape E20. La restitution est faite par exemple de manière similaire à celle illustrée par la figure 3D.

Selon un mode particulier de réalisation de l'invention, lors de l'étape E152, le terminal 15 restitue visuellement à l'utilisateur UA l'information du type du terminal 14 et les capacités supportées par le terminal 14 simultanément à l'information du type du terminal 12 et les capacités supportées par le terminal 12. La restitution est par exemple illustrée par la figure 3H. La figure 3H montre un écran 45 du terminal 15 affichant :
- une icône 31 représentant une télévision recevant un appel (terminal 12) et des chaînes de caractères 32 indiquant les fonctionnalités supportées par le terminal 12 représenté par l'icône 31. Selon cet exemple, le terminal 12 supporte la fonctionnalité de communication de type voix en qualité haute définition (Tel HD), la fonctionnalité de communication en visiophonie (Visio), la capacité RCS de partage d'image (IS) et la capacité RCS de partage de vidéo (VS).
- une icône 35 représentant un smartphone recevant un appel (terminal 14) et des chaînes de caractères 36 indiquant les fonctionnalités supportées par le terminal 14 représenté par l'icône 35. Selon cet exemple, le terminal 14 supporte les capacités RCS de messagerie instantanée (IM) et de partage de fichiers (FT).

Selon un mode particulier de réalisation de l'invention, les étapes E70, E8 et E12 ne sont mises en oeuvre que lorsque le terminal 15 reçoit au moins une deuxième réponse provisoire, par exemple de type SIP 180 Ringing, en provenance d'un terminal associé à l'identité publique Id_B différent du terminal 12. Selon ce mode de réalisation de l'invention, les étapes E70, E8 et E12 ne sont alors mises en oeuvre par le terminal 15 que suite à l'étape E14 de réception d'un message SIP 180 Ringing envoyé par le terminal 14 au cours de l'étape E13.

Selon un autre mode particulier de réalisation de l'invention, le message SIP 180 Ringing reçu par le terminal 15 au cours de l'étape E14 est reçu après un intervalle de temps prédéterminé après l'envoi du message SIP INVITE au cours de l'étape E1. Cet intervalle de temps prédéterminé correspond par exemple à 5 sonneries ou 20 secondes. Dans ce mode particulier de réalisation de l'invention, au cours de l'étape E150 ou au cours de l'étape E20, la restitution de l'information représentative des capacités supportées par le terminal 12 est modifiée. La modification est par exemple illustrée par le changement d'affichage par le terminal 15 d'une restitution illustrée par la figure 3D à une restitution illustrée par la figure 3F. La figure 3D représente le terminal 12 recevant la demande de communication. La figure 3F représente les mêmes éléments que la figure 3D mais les éléments 34 et 32 représentant les caractéristiques du terminal 12 sont barrés d'une croix. La figure 3F montre également une icône 33 représentant le terminal 14 recevant un appel.

Ce mode particulier de réalisation de l'invention correspond par exemple au cas où la demande de communication envoyée lors de l'étape E1 par le terminal 15 est transmise par le réseau de communication 10 de manière séquentielle aux terminaux 12 et 14. Dans ce mode particulier de réalisation de l'invention, la demande de communication est transmise dans un premier temps au terminal 12. Puis, après un intervalle de temps prédéterminé, si le terminal 12 n'a pas établi la communication demandée avec le terminal 15, la transmission de la demande de communication au terminal 12 est abandonnée. L'abandon de la transmission de la demande de communication est faite de manière connue par l'envoi par le réseau de communication 10 d'un message SIP CANCEL au terminal 12 (non représenté). La demande de communication est alors transmise par le réseau de communication 10 au terminal 14 (étape E4).

La représentation illustrée en figure 3F permet d'indiquer à l'utilisateur UA du terminal 15 que la demande de communication est transmise à un nouveau terminal (terminal 14 représenté par l'icône 33) et que le terminal 12 (représenté par l'icône 34) ne sonne plus.

Lors d'une étape E21, le terminal 14 décroche la demande de communication.

Suite au décroché de l'étape E21, lors d'une étape E22, le terminal 14 envoie un message SIP 200 OK d'acceptation de la demande de communication à destination du terminal 15. Le message SIP 200OK comprend notamment :
- dans un champ « CallID », la chaine de caractère identifiant la communication demandée, identique à la valeur du champ « CallID » du message SIP INVITE envoyé par le terminal 15 au cours de l'étape E1,
- dans un champ « From », l'adresse du terminal 15 identique à la valeur du champ « From » du message SIP INVITE envoyé par le terminal 15 au cours de l'étape E1,
- dans un champ « To », l'identité publique Id_B de l'utilisateur UB et un champ « Tag » identifiant le terminal 14,
- dans un champ SDP une liste de paramètres de session relatifs au terminal 14, tels que les codecs audio, vidéo supportés par le terminal 14 et les adresses IP et ports de connexion utilisés par le terminal 14 pour recevoir et émettre les flux média de la communication.

Au cours de l'étape E22, le réseau de communication 10 reçoit le message SIP 200OK.

Lors d'une étape E23, le réseau de communication 10 envoie au terminal 15 le message SIP 200OK reçu lors de l'étape E22. Au cours de l'étape E23, le terminal 15 reçoit le message SIP 200OK envoyé par le terminal 14 lors de l'étape E22.

Suite à l'étape E23, comme le terminal 14 a accepté la demande de communication initiée par le terminal 15, lors d'une étape E24, le terminal 15 restitue à l'utilisateur UA une information indiquant que la demande de communication est acceptée par le terminal 14 et non par le terminal 12. La restitution est par exemple illustrée par la figure 3I. La figure 3I illustre l'écran 45 du terminal 15 affichant une icône 35 représentant le terminal 14 et les capacités 36 supportées par terminal 14. Sur la figure 3I, l'icône représentant le terminal 12 n'est plus affichée.

Suite à l'étape E23, lors d'une étape E25, le terminal 15 envoie à destination du terminal 14 un message d'acquittement SIP ACK. Au cours de l'étape E25, le réseau de communication 10 reçoit le message SIP ACK.

Lors d'une étape E26, le réseau de communication 10 envoie au terminal 14 le message SI PACK reçu lors de l'étape E25.

Au cours de l'étape E25, l'envoi par le terminal 15 du message SIP ACK au terminal 14 permet de terminer la phase d'établissement d'appel initiée par l'étape E1.

La communication est alors établie entre le terminal 15 et le terminal 14 et les flux média de la communication sont échangés au cours de l'étape E27 entre les terminaux 15 et 14.

Lors d'une étape E28, le réseau de communication 10 abandonne la transmission de la demande de communication au terminal 12, par l'envoi d'un message SIP CANCEL.

La figure 4 illustre un dispositif 40 adapté pour mettre en oeuvre des étapes du procédé d'établissement d'une communication selon un mode particulier de réalisation de l'invention.

Le dispositif 40 comprend un module de stockage 42, par exemple une mémoire (MEM), une unité de traitement 43, équipée par exemple d'un microprocesseur (PROC), et pilotée par le programme d'ordinateur (PG) 41 mettant en oeuvre le procédé d'établissement d'une communication tel que décrit en relation avec la figure 2. A l'initialisation, les instructions de code du programme d'ordinateur 41 sont par exemple chargées en mémoire (MEM) avant d'être exécutées par le processeur (PROC) de l'unité de traitement 43. Le processeur de l'unité de traitement 43 met en oeuvre les étapes du procédé d'établissement d'une communication initiée par le terminal 15 émetteur d'une demande de communication à destination d'une identité publique partagée Id_B qui est associée à au moins deux terminaux destinataires 12 et 14, selon les instructions du programme d'ordinateur 41. Le processeur de l'unité de traitement 43 met notamment en oeuvre :
- une étape de réception par le terminal 15 d'au moins une réponse provisoire à la demande de communication, ladite réponse provisoire étant en provenance de l'un des deux terminaux destinataires 12 ou 14,
- une étape d'obtention, à partir de la réponse provisoire reçue, d'une adresse identifiant le terminal destinataire qui a envoyé la réponse provisoire reçue,
- une étape d'envoi d'un message de découverte des capacités d'un terminal audit terminal destinataire à partir de l'adresse obtenue,
- une étape de réception d'un message de réponse au message de découverte des capacités d'un terminal, en provenance du terminal destinataire, ledit message de réponse comprenant les capacités supportées par le terminal destinataire,
- une étape de restitution d'une information représentative des capacités supportées par le terminal destinataire.

Le dispositif 40 comporte aussi des moyens de communication 46. Les moyens de communication sont par exemple mis en oeuvre par un module de communication (COM). Le module de communication permet notamment au dispositif 40 d'établir des communications via le réseau de communication 10 de la figure 1. Le module de communication (COM) permet d'émettre et de recevoir des messages depuis et vers les terminaux 12 et 14, via le réseau de communications 10. Le dispositif 40 comprend des moyens de restitution 45 permettant notamment de restituer une information représentative des capacités supportées par le terminal destinataire selon un mode particulier de réalisation de l'invention. Les moyens de restitution sont par exemple mis oeuvre par un module d'affichage (AFF), tel qu'un écran.

Selon un mode particulier de réalisation de l'invention, le dispositif 40 est compris dans un terminal, tel que par exemple le terminal 15 de la figure 1. Plus généralement, le dispositif 40 est compris dans un terminal tel que par exemple un ordinateur personnel, fixe ou mobile, un téléphone mobile, une tablette, une télévision connectée, un smartphone, etc...

## Revendications

1. Procédé d'établissement d'une communication initiée par un terminal (15) émetteur d'une demande de communication (E1) à destination d'une identité publique partagée qui est associée à au moins un premier et un deuxième terminal destinataires (12,14), comprenant les étapes suivantes mises en oeuvre par le terminal émetteur :
- une étape d'envoi de la demande de communication à destination de l'identité publique partagée, la demande de communication étant reçue par au moins le premier et le deuxième terminal destinataire,
- suite à la réception (E6, E14) d'au moins une première réponse provisoire à la demande de communication, en provenance du premier terminal destinataire et d'une deuxième réponse provisoire à la demande de communication en provenance du deuxième terminal destinataire, pour chaque première et deuxième réponse provisoire reçue
i. une étape d'obtention (E70, E150), à partir de la réponse provisoire reçue, d'une adresse identifiant le terminal destinataire qui a envoyé la réponse provisoire reçue,
ii. une étape d'envoi (E8, E16) d'un message de découverte des capacités d'un terminal audit terminal destinataire à partir de l'adresse obtenue,
iii. une étape de réception (E11, E19) d'un message de réponse au message de découverte des capacités d'un terminal, en provenance du terminal destinataire, ledit message de réponse comprenant les capacités supportées par le terminal destinataire,
- une étape de restitution (E72, E152) d'une information représentative des capacités supportées par le premier terminal destinataire et d'une information représentative des capacités supportées par le deuxième terminal destinataire.

2. Procédé d'établissement d'une communication selon la revendication 1, dans lequel le message de découverte des capacités envoyé audit terminal destinataire comprend un champ identifiant un dialogue entre le terminal émetteur et le terminal destinataire, ledit champ étant différent du champ identifiant un dialogue compris dans la demande de communication envoyée par le terminal émetteur.

3. Procédé d'établissement d'une communication selon l'une quelconque des revendications 1 ou 2, comprenant en outre :
- une étape d'obtention à partir de la réponse provisoire reçue d'une information représentative d'un type de terminal correspondant au type du terminal destinataire ayant envoyé la réponse provisoire reçue,
- une étape de restitution de ladite information représentative du type du terminal destinataire, simultanément à la restitution de l'information représentative des capacités supportées par le terminal destinataire.

4. Procédé d'établissement d'une communication selon l'une quelconque des revendications 1 à 3, dans lequel, la restitution de l'information représentative des capacités supportées par le premier terminal destinataire est effectuée simultanément à la restitution de l'information représentative des capacités supportées par le deuxième terminal destinataire.

5. Procédé d'établissement d'une communication selon l'une quelconque des revendications 1 à 3, dans lequel, la réception de la deuxième réponse provisoire à la demande de communication en provenance du deuxième terminal destinataire étant reçue après un intervalle de temps prédéterminé après l'envoi de la demande de communication, il comprend simultanément à la restitution de l'information représentative des capacités supportées par le deuxième terminal destinataire, une étape de modification de la restitution de l'information représentative des capacités supportées par le premier terminal destinataire ayant envoyé la première réponse provisoire à la demande de communication de sorte à indiquer que le premier terminal destinataire ne sonne plus.

6. Dispositif d'établissement d'une communication initiée par un terminal émetteur (15) d'une demande de communication à destination d'une identité publique partagée qui est associée à au moins un premier et un deuxième terminal destinataires (12, 14), comprenant :
- des moyens d'envoi (COM) de la demande de communication à destination de l'identité publique partagée, la demande de communication étant reçue par au moins le premier et le deuxième terminal destinataire,
- des moyens de réception (COM) d'au moins une réponse provisoire à la demande de communication, en provenance du premier terminal destinataire et d'une deuxième réponse provisoire à la demande de communication en provenance du deuxième terminal destinataire,
- des moyens d'obtention (PROC, PG), activés suite à la réception de chaque réponse provisoire reçue,, d'une adresse identifiant le terminal destinataire ayant envoyé la réponse provisoire, à partir de ladite réponse provisoire,
- des moyens d'envoi (COM) d'un message de découverte des capacités d'un terminal audit terminal destinataire ayant envoyé la réponse provisoire, à partir de l'adresse obtenue,
- des moyens de réception (COM) d'un message de réponse au message de découverte des capacités d'un terminal, en provenance dudit terminal destinataire, ledit message de réponse comprenant les capacités supportées par ledit terminal destinataire,
- des moyens de restitution (AFF) d'une information représentative des capacités supportées par le premier terminal destinataire et d'une information représentative des capacités supportées par le deuxième terminal destinataire.

7. Terminal comprenant un dispositif selon la revendication 6.

8. Programme d'ordinateur comportant des instructions de code de programme pour l'exécution des étapes du procédé d'établissement d'une communication selon l'une quelconque des revendications 1 à 5, lorsque le programme est exécuté par un processeur.

## Patentansprüche

1. Verfahren zum Aufbau einer Kommunikation, die von einem Endgerät (15) eingeleitet wird, das eine Kommunikationsanforderung (E1) an eine gemeinsam genutzte öffentliche Identität sendet, die mindestens einem ersten und einem zweiten Zielendgerät (12, 14) zugeordnet ist, das die folgenden Schritte enthält, die vom sendenden Endgerät ausgeführt werden:
- einen Schritt des Schickens der Kommunikationsanforderung an die gemeinsam genutzte öffentliche Identität, wobei die Kommunikationsanforderung von mindestens dem ersten und dem zweiten Zielendgerät empfangen wird,
- nach dem Empfang (E6, E14) mindestens einer ersten vorläufigen Antwort auf die Kommunikationsanforderung vom ersten Zielendgerät und einer zweiten vorläufigen Antwort auf die Kommunikationsanforderung vom zweiten Zielendgerät, für jede empfangene erste und zweite vorläufige Antwort
i. einen Schritt des Erhalts (E70, E150), ausgehend von der empfangenen vorläufigen Antwort, einer Adresse, die das Zielendgerät identifiziert, das die empfangene vorläufige Antwort geschickt hat,
ii. einen Schritt des Schickens (E8, E16) einer Entdeckungsnachricht der Kapazitäten eines Endgeräts an das Zielendgerät ausgehend von der erhaltenen Adresse,
iii. einen Schritt des Empfangs (E11, E19) einer Antwortnachricht auf die Entdeckungsnachricht der Kapazitäten eines Endgeräts, vom Zielendgerät kommend, wobei die Antwortnachricht die vom Zielendgerät unterstützten Kapazitäten enthält,
- einen Schritt der Wiederherstellung (E72, E152) einer Information, die für die vom ersten Zielendgerät unterstützten Kapazitäten repräsentativ ist, und einer Information, die für die vom zweiten Zielendgerät unterstützten Kapazitäten repräsentativ ist.

2. Verfahren zum Aufbau einer Kommunikation nach Anspruch 1, wobei die an das Zielendgerät geschickte Entdeckungsnachricht der Kapazitäten ein Feld enthält, das einen Dialog zwischen dem sendenden Endgerät und dem Zielendgerät identifiziert, wobei das Feld sich von dem Feld unterscheidet, das einen Dialog identifiziert, der in der vom sendenden Endgerät geschickten Kommunikationsanforderung enthalten ist.

3. Verfahren zum Aufbau einer Kommunikation nach einem der Ansprüche 1 oder 2, das außerdem enthält:
- einen Schritt des Erhalts ausgehend von der empfangenen vorläufigen Antwort einer Information, die für einen Endgerättyp repräsentativ ist, der dem Typ des Zielendgeräts entspricht, das die empfangene vorläufige Antwort gesendet hat,
- einen Schritt der Wiederherstellung der für den Typ des Zielendgeräts repräsentativen Information gleichzeitig mit der Wiederherstellung der für die vom Zielendgerät unterstützten Kapazitäten repräsentativen Information.

4. Verfahren zum Aufbau einer Kommunikation nach einem der Ansprüche 1 bis 3, wobei die Wiederherstellung der für die vom ersten Zielendgerät unterstützten Kapazitäten repräsentativen Information gleichzeitig mit der Wiederherstellung der für die vom zweiten Zielendgerät unterstützten Kapazitäten repräsentativen Information ausgeführt wird.

5. Verfahren zum Aufbau einer Kommunikation nach einem der Ansprüche 1 bis 3, wobei, da der Empfang der zweiten vorläufigen Antwort auf die Kommunikationsanforderung vom zweiten Zielendgerät nach einem vorbestimmten Zeitraum nach dem Schicken der Kommunikationsanforderung empfangen wird, es gleichzeitig mit der Wiederherstellung der für die vom zweiten Zielendgerät unterstützten Kapazitäten repräsentativen Information einen Schritt der Änderung der Wiederherstellung der für die vom ersten Zielendgerät, das die erste vorläufige Antwort auf die Kommunikationsanforderung geschickt hat, unterstützten Kapazitäten repräsentativen Information enthält, um anzuzeigen, dass das erste Zielendgerät nicht mehr läutet.

6. Vorrichtung zum Aufbau einer Kommunikation, die von einem eine Kommunikationsanforderung an eine gemeinsam genutzte öffentliche Identität, die mindestens einem ersten und einem zweiten Zielendgerät (12, 14) zugeordnet ist, sendenden Endgerät (15) eingeleitet wurde, die enthält
- Einrichtungen zum Schicken (COM) der Kommunikationsanforderung an die gemeinsam genutzte öffentliche Identität, wobei die Kommunikationsanforderung von mindestens dem ersten und dem zweiten Zielendgerät empfangen wird,
- Einrichtungen zum Empfang (COM) mindestens einer vorläufigen Antwort auf die Kommunikationsanforderung vom ersten Zielendgerät und einer zweiten vorläufigen Antwort auf die Kommunikationsanforderung vom zweiten Zielendgerät,
- Einrichtungen zum Erhalt (PROC, PG), die nach dem Empfang jeder empfangenen vorläufigen Antwort aktiviert werden, einer Adresse, die das Zielendgerät identifiziert, das die vorläufige Antwort gesendet hat, ausgehend von der vorläufigen Antwort,
- Einrichtungen zum Schicken (COM) einer Entdeckungsnachricht der Kapazitäten eines Endgeräts an das Zielendgerät, das die vorläufige Antwort geschickt hat, ausgehend von der erhaltenen Adresse,
- Einrichtungen zum Empfang (COM) einer Antwortnachricht auf die Entdeckungsnachricht der Kapazitäten eines Endgeräts vom Zielendgerät, wobei die Antwortnachricht die vom Zielendgerät unterstützten Kapazitäten enthält,
- Einrichtungen zur Wiederherstellung (AFF) einer für die vom ersten Zielendgerät unterstützten Kapazitäten repräsentativen Information und einer für die vom zweiten Zielendgerät unterstützten Kapazitäten repräsentativen Information.

7. Endgerät, das eine Vorrichtung nach Anspruch 6 enthält.

8. Computerprogramm, das Programmcodeanweisungen für die Ausführung der Schritte des Verfahrens zum Aufbau einer Kommunikation nach einem der Ansprüche 1 bis 5 aufweist, wenn das Programm von einem Prozessor ausgeführt wird.

## Claims

1. Method for establishing a communication initiated by a sender terminal (15) sending a communication request (E1) destined for a shared public identity which is associated with at least one first and one second destination terminal (12, 14), comprising the following steps implemented by the sender terminal:
- a step of dispatching the communication request destined for the shared public identity, the communication request being received by at least the first and the second destination terminal,
- subsequent to the reception (E6, E14) of at least one first provisional response to the communication request originating from the first destination terminal and of a second provisional response to the communication request originating from the second destination terminal, for each first and second provisional response received
i. a step of obtaining (E70, E150), on the basis of the provisional response received, an address identifying the destination terminal which dispatched the provisional response received,
ii. a step of dispatching (E8, E16) a discovery message in respect of the capacities of a terminal to said destination terminal on the basis of the address obtained,
iii. a step of receiving (E11, E19) a response message in response to the discovery message in respect of the capacities of a terminal, originating from the destination terminal, said response message comprising the capacities supported by the destination terminal,
- a step of retrieving (E72, E152) an item of information representative of the capacities supported by the first destination terminal and of an item of information representative of the capacities supported by the second destination terminal.

2. Method for establishing a communication according to Claim 1, in which the discovery message in respect of the capacities which is dispatched to said destination terminal comprises a field identifying a dialogue between the sender terminal and the destination terminal, said field being different from the field identifying a dialogue included in the communication request dispatched by the sender terminal.

3. Method for establishing a communication according to either one of Claims 1 and 2, furthermore comprising:
- a step of obtaining on the basis of the provisional response received an item of information representative of a type of terminal corresponding to the type of the destination terminal that dispatched the provisional response received,
- a step of retrieving said item of information representative of the type of the destination terminal, simultaneously with the retrieving of the item of information representative of the capacities supported by the destination terminal.

4. Method for establishing a communication according to any one of Claims 1 to 3, in which the retrieving of the item of information representative of the capacities supported by the first destination terminal is performed simultaneously with the retrieving of the item of information representative of the capacities supported by the second destination terminal.

5. Method for establishing a communication according to any one of Claims 1 to 3, in which, the reception of the second provisional response to the communication request originating from the second destination terminal being received after a predetermined time interval after the dispatching of the communication request, it comprises, simultaneously with the retrieving of the item of information representative of the capacities supported by the second destination terminal, a step of modifying the retrieving of the item of information representative of the capacities supported by the first destination terminal that dispatched the first provisional response to the communication request so as to indicate that the first destination terminal is no longer ringing.

6. Device for establishing a communication initiated by a sender terminal (15) sending a communication request destined for a shared public identity which is associated with at least one first and one second destination terminal (12, 14), comprising:
- means (COM) for dispatching the communication request destined for the shared public identity, the communication request being received by at least the first and the second destination terminal,
- means (COM) for receiving at least one provisional response to the communication request originating from the first destination terminal and a second provisional response to the communication request originating from the second destination terminal,
- means (PROC, PG), activated subsequent to the reception of each provisional response received, for obtaining an address identifying the destination terminal that dispatched the provisional response, on the basis of said provisional response,
- means (COM) for dispatching a discovery message in respect of the capacities of a terminal to said destination terminal that dispatched the provisional response, on the basis of the address obtained,
- means (COM) for receiving a response message in response to the discovery message in respect of the capacities of a terminal, originating from said destination terminal, said response message comprising the capacities supported by said destination terminal,
- means (AFF) for retrieving an item of information representative of the capacities supported by the first destination terminal and an item of information representative of the capacities supported by the second destination terminal.

7. Terminal comprising a device according to Claim 6.

8. Computer program comprising program code instructions for the execution of the steps of the method for establishing a communication according to any one of Claims 1 to 5, when the program is executed by a processor.
